# EUROPÄISCHE PATENTSCHRIFT

(11) **EP 2 920 007 B1**
(45) Veröffentlichungstag und Bekanntmachung des Hinweises auf die Patenterteilung: **31.08.2016**
(21) Anmeldenummer: 13756459.7
(22) Anmeldetag: 02.09.2013
(51) Int. Cl.: B60C 11/13, B60C 11/03, B60C 11/12

(54) **FAHRZEUGLUFTREIFEN**
PNEUMATIC TIRE
PNEUMATIQUE

(30) Priorität: 19.11.2012 DE 102012111116
(43) Veröffentlichungstag der Anmeldung: 23.09.2015
(73) Patentinhaber: Continental Reifen Deutschland GmbH, 30165 Hannover (DE)
(72) Erfinder: CHUN YI, Yeo, 30625 Hannover (DE); MOHD WAHINUDDIN, Moh Wahi, 30159 Hannover (DE); POKUTTA-PASKALEVA, Anastassia, 30306 Atlanta (US); GONCALVES-ANKIEWICZ, Amelia, Olga, 30559 Hannover (DE); HOFFMANN, Jens, 40670 Meerbusch (DE); WÜST, Alexander, 30926 Seelze (DE); DOPHEIDE, Franz-Josef, 49577 Ankum (DE); WIESE, Klaus, 30559 Hannover (DE); VERMEHR, Ulrich, 30163 Hannover (DE)
(74) Vertreter: Finger, Karsten
(86) Internationale Anmeldenummer: PCT/EP2013/068044
(87) Internationale Veröffentlichungsnummer: WO 2014/075827

(56) Entgegenhaltungen:
- EP-A1- 1 920 951
- EP-A1- 2 289 714

## Beschreibung

Die Erfindung betrifft einen Fahrzeugluftreifen für einen Nutzfahrzeugreifen, insbesondere für den Einsatz unter winterlichen Fahrbedingungen, mit einem Laufstreifen mit mindestens sechs in Umfangsrichtung umlaufenden, im Wesentlichen übereinstimmend breiten Blockreihen, welche voneinander durch in Umfangrichtung umlaufende Umfangsnuten getrennt sind, wobei die Blöcke der einzelnen Blockreihen voneinander durch zumindest im Wesentlichen gerade und in jeder Blockreihe zueinander parallel verlaufenden Quernuten getrennt sind, welche zur axialen Richtung unter Winkeln von höchstens 30° verlaufen, wobei die Blöcke jeweils mit einer Anzahl von sich parallel zu den Quernuten erstreckenden Einschnitten versehen sind, wobei in jeder Laufstreifenhälfte je zwei Blockreihenpaare verlaufen, welche voneinander durch in Umfangsrichtung umlaufende, in der maximalen Profiltiefe ausgeführte erste Umfangsnuten getrennt sind, wobei zwischen den Blockreihen jedes Blockreihenpaares zweite, schmäler als die ersten Umfangsnuten ausgeführte Umfangsnuten verlaufen, welche bis in eine Tiefe reichen, die geringer ist als die maximale Profiltiefe.

Nutzfahrzeugreifen mit einem Blockprofil im Laufstreifen, dessen Blöcke mit Einschnitten versehen sind, sind in verschiedenen Ausführungsvarianten bekannt. Solche Nutzfahrzeugreifen sind vor allem für den Einsatz unter winterlichen Fahrbedingungen geeignet. Ein Fahrzeugluftreifen der eingangs genannten Art, welcher jedoch ein Reifen für Personenkraftwagen ist, ist beispielsweise aus der EP 2 289 714 A1 bekannt. Es ist ferner beispielsweise ein Nutzfahrzeugreifen, insbesondere für Autobusse, bekannt, welcher einen Laufstreifen bestehend aus sechs in Umfangsrichtung umlaufenden Blockreihen aufweist. Jeder Block ist mit zumindest einem in axialer Richtung orientierten Einschnitt versehen, sodass der Reifen mehr als tausend Einschnitte im Laufstreifen aufweist, die eine gute Traktion auf Schnee gewährleisten. Auf Fahrbahnen mit einer dickeren Schneeschicht oder auf mit Schnee bedeckten steilen Fahrbahnen sind jedoch die Traktionseigenschaften und die Handlingeigenschaften dieses bekannten Fahrzeugluftreifens weniger zufriedenstellend.

Der Erfindung liegt daher die Aufgabe zugrunde, den Laufstreifen eines Fahrzeugluftreifens der eingangs genannten Art hinsichtlich der Traktionseigenschaften und Handlingeigenschaften auf tief verschneiten Fahrbahnen und auf Schneefahrbahnen in steilerem Gelände deutlich zu verbessern.

Gelöst wird die gestellte Aufgabe erfindungsgemäß dadurch, dass sämtliche Quernuten eine sich über ihre Erstreckung ändernde Tiefe aufweisen, derart, dass ihr Nutgrund, im Querschnitt betrachtet, entlang einer schwach S-förmig gekrümmten Kurve verläuft, wobei die Tiefe der Quernuten an ihren Mündungsstellen in die ersten Umfangsnuten bzw. an ihren Enden bei den Außenschultern des Reifens zumindest im Wesentlichen der maximalen Profiltiefe entspricht und wobei die Tiefe der Quernuten an den Mündungsbereichen in die zweiten Umfangsnuten der Tiefe dieser Umfangsnuten entspricht.

Durch den speziellen Tiefenverlauf der Quernuten in den Blockreihenpaaren und die geringere Tiefe der zweiten, schmalen Umfangsnuten zwischen den Blockreihen der Blockreihenpaare sind diese Blockreihen paarweise aneinander gekoppelt, wodurch der Laufstreifen stabilisiert wird und die Handlingeigenschaften verbessert werden. Die Vielzahl an Quernuten und Einschnitten stellt die für eine gute Traktion erforderlichen Kanten zur Verfügung.

Für einen guten Schneegriff ist es besonders vorteilhaft, wenn die Quernuten in den schulterseitigen Blockreihenpaaren breiter sind als die Quernuten in den mittleren Blockreihenpaaren, insbesondere sollte die Breite der Quernuten in den schulterseitigen Blockreihenpaaren zwischen 150% und 220% der Breite der Quernuten in den mittleren Blockreihenpaaren betragen.

Der erfindungsgemäße Fahrzeugluftreifen weist eine für eine gute Traktion auf Schnee besonders günstige Umfangs- und Querstabilität in den Blockreihenpaaren dann auf, wenn die Umfangsnuten zwischen den Blockreihen der schulterseitigen Blockreihenpaare eine Tiefe aufweisen, die höchstens 35% der maximalen Profiltiefe entspricht, und wenn die Umfangsnuten zwischen den Blockreihen der mittleren Blockreihenpaare eine Tiefe aufweisen, die höchstens 55% der maximalen Profiltiefe entspricht. In diesem Zusammenhang ist es auch vorteilhaft, wenn diese Umfangsnuten eine Breite von 1,5 mm bis 3 mm aufweisen.

In den schulterseitigen Blockreihenpaaren ist eine höhere Umfangsstabilität für die Handlingeigenschaften vorteilhaft. Gemäß der Erfindung weisen daher die Blöcke in den Blockreihen der schulterseitigen Blockreihenpaare eine Umfangslänge auf, die im Wesentlichen dem Zweifachen der Umfangslänge der Blöcke in den Blockreihen der mittleren Blockreihenpaare entspricht.

Im mittleren Laufstreifenbereich ist es für die Handlingeigenschaften vorteilhaft, wenn die Quersteifigkeit der hier angeordneten Profilblöcke etwas größer ist, als jene der Blöcke in den schulterseitigen Blockreihenpaaren. Gemäß der Erfindung sind daher die Einschnitte in den Blöcken der Blockreihen der mittleren Blockreihenpaare sogenannte 3D-Einschnitte, die Einschnitte in den Blöcken der Blockreihen der schulterseitigen Blockreihenpaare sogenannte 2D-Einschnitte. Als zusätzliche, die Steifigkeit beeinflussende Maßnahme können die Einschnitte, in Draufsicht betrachtet, einen zickzack- oder wellenförmigen Verlauf aufweisen.

Die Einschnitte werden ferner erfindungsgemäß derart ausgeführt, die Einschnitte in den mittleren Blockreihenpaaren und in den Blöcken der weiter laufstreifeninnenseitig verlaufenden Blockreihen der schulterseitigen Blockreihenpaare einen Tiefenverlauf aufweisen, welcher dem Tiefenverlauf der Quernuten in den Blockreihen, in welchen die betreffenden Einschnitte verlaufen, zumindest im Wesentlichen entspricht.

Weitere Merkmale, Vorteile aller Einzelheiten der Erfindung werden nun anhand der Zeichnung, die ein Ausführungsbeispiel darstellt, näher beschrieben. Dabei zeigen
Fig. 1 eine leicht perspektivische Draufsicht auf einen Umfangsabschnitt einer Abwicklung einer Ausführungsform eines Laufstreifens eines Fahrzeugluftreifens,
Fig. 2 eine Schrägansicht des Laufstreifenabschnittes aus Fig. 1 und
Fig. 3 einen Schnitt entlang der Linie III- III der Fig. 1.

Die Erfindung befasst sich mit einer speziellen Ausgestaltung eines für den Einsatz unter winterlichen Fahrbedingungen, insbesondere auf schneeigem oder eisigem Untergrund, besonders geeigneten Laufstreifens von Nutzfahrzeugreifen, vorzugsweise Busreifen.

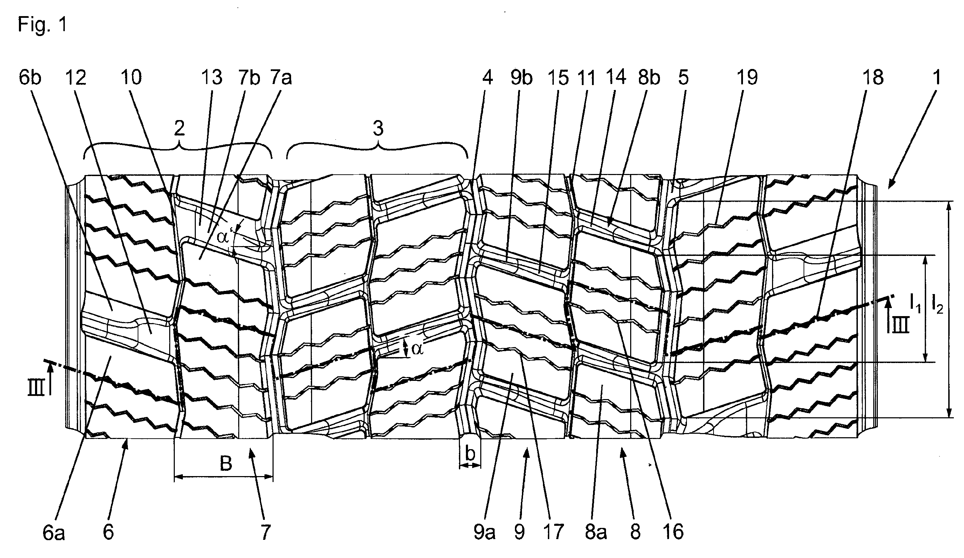

Fig. 1 zeigt eine Draufsicht auf einen Umfangsabschnitt einer erfindungsgemäßen Ausführungsform eines Laufstreifens 1 mit je zwei Blockreihenpaaren 2, 3 in jeder Laufstreifenhälfte. Entlang der Äquatorialebene des Fahrzeugluftreifens ist der Laufstreifen 1 von einer zentralen Umfangsnut 4 umlaufen, welche bei der gezeigten Ausführungsform einen leicht zickzackförmigen bzw. wellenförmigen Verlauf mit kleiner Amplitude aufweist. Die schulterseitigen Blockreihenpaare 2 sind von den mittigen Blockreihenpaaren 3 durch je eine ebenfalls zickzack- bzw. wellenförmig verlaufende Umfangsnut 5 mit kleiner Zickzack- bzw. Wellenamplitude getrennt. Die Umfangsnuten 4 und 5 weisen an der Laufstreifenoberfläche eine konstante Breite b von 6 mm bis 10 mm auf, besitzen einen im Wesentlichen U-förmigen Querschnitt und reichen in radialer Richtung bis auf die im betreffenden Laufstreifen vorgesehene maximale Profiltiefe, welche bei erfindungsgemäß ausgeführten Reifen zwischen 12 mm und 30 mm betragen kann. Sämtliche Umfangsnuten 4, 5 können in Umfangsrichtung auch gerade verlaufen. Jedes schulterseitige Blockreihenpaar 2 umfasst zwei Blockreihen 6, 7, welche voneinander durch eine schmale, in Umfangsrichtung umlaufende Umfangsnut 10 getrennt sind, jedes mittige Blockreihenpaar 3 umfasst zwei Blockreihen 8, 9 welche ebenfalls durch eine schmale, in Umfangsrichtung umlaufende Umfangsnut 11 voneinander getrennt sind. Die Umfangsnuten 10, 11 verlaufen bei der gezeigten Ausführungsform analog zu den breiten Umfangsnuten 4, 5 in einer Zickzack- bzw. Wellenform mit einer Amplitude, die der Amplitude der Zickzack- bzw. Wellenform der Umfangsnuten 4, 5 entsprechen kann und bei der gezeigten Ausführungsform entspricht. Die Breite der Umfangsnuten 10, 11 an der Laufstreifenoberfläche ist über die Erstreckung der Nuten 10, 11 konstant und beträgt zwischen 1,5 mm und 2,5 mm, bei der gezeigten Ausführungsform etwa 2 mm. Auch die Umfangsnuten 10, 11 können in Umfangsrichtung gerade verlaufen. Die Umfangsnuten 10 weisen eine konstante Tiefe auf, die zwischen 20 % und 35 % der maximalen Profiltiefe, insbesondere etwa 25 % der maximalen Profiltiefe, beträgt. Die Umfangsnuten 11 weisen eine ebenfalls konstante Tiefe auf, die zwischen 45 % und 55 % der maximalen Profiltiefe, insbesondere etwa 50 % derselben, beträgt.

Die Breite B sämtlicher Blockreihen 6, 7, 8, 9 ist bei der gezeigten bevorzugten Ausführungsform des erfindungsgemäßen Laufstreifens im Wesentlichen gleich groß und beträgt je nach Reifendimension zwischen 20 mm und 35 mm. Die Breite B entspricht dabei jeweils der größten axialen Erstreckung der Blockreihen 6, 7, 8, 9. Die axial äußeren Blockreihen 6 sind von schulterseitigen, im Wesentlichen in radialer Richtung verlaufenden und in die nicht gezeigten Seitenwände übergehenden Schulterflanken 20 begrenzt.

Die Blockreihen 8, 9 setzen sich aus Blöcken 8a und 9a zusammen, welche in Umfangsrichtung voneinander durch in Draufsicht gerade verlaufende Quernuten 8b und 9b getrennt sind. Die Quernuten 8b, 9b weisen an der Laufstreifenoberfläche über ihre Erstreckung eine im Wesentlichen konstante Breite auf, welche zwischen 3 mm und 6 mm beträgt. Die Quernuten 8b, 9b verlaufen parallel zueinander und gegenüber der axialen Richtung unter einem kleinen spitzen Winkel α, welcher zwischen 20° und 30° beträgt. Der Winkel ist in sämtlichen Quernuten 8b, 9b zumindest im Wesentlichen gleich groß, wobei bei der gezeigten Ausführungsform die Quernuten 8b, 9b in dem einen Blockreihenpaar 3, welches in der einen Laufstreifenhälfte verläuft, gegensinnig geneigt sind zu den Quernuten 8b, 9b, welche im Blockreihenpaar 3 in der zweiten Laufstreifenhälfte verlaufen. Die Blöcke 8a, 9a weisen eine Umfangslänge l₁ auf, welche zwischen 110 % und 140 % der Breite B beträgt und innerhalb einer Blockreihe 8, 9 in Folge der üblichen Pitchlängenvariation des Laufstreifenprofils variiert.

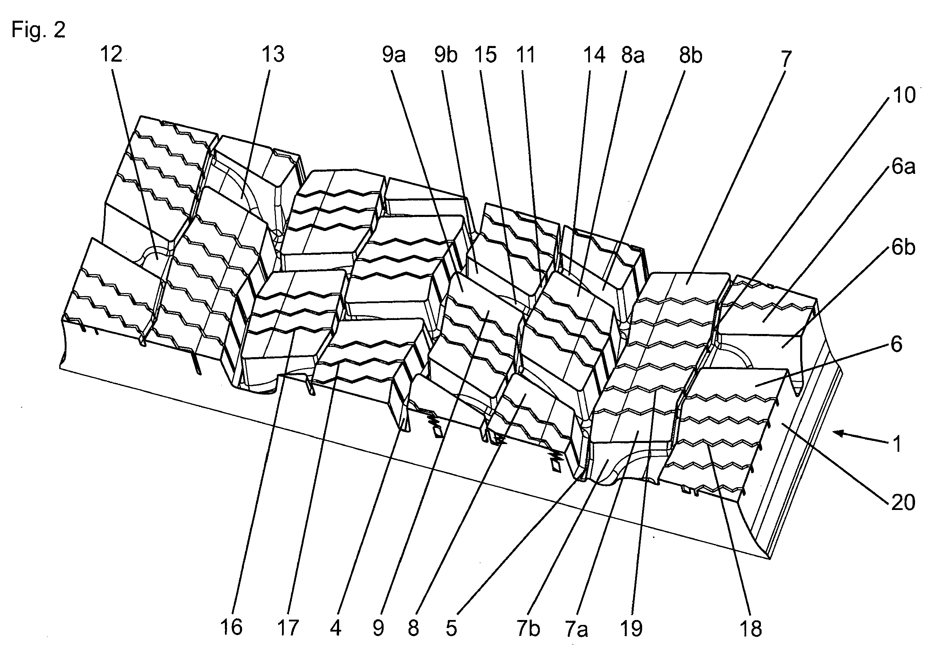

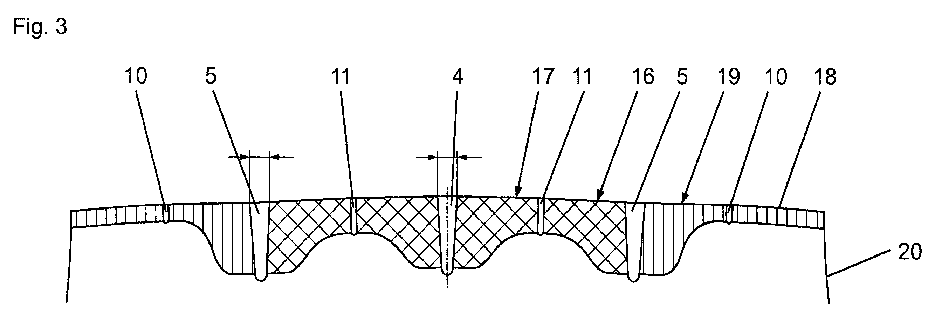

Wie insbesondere Fig. 2 zeigt, variiert die Tiefe der Quernuten 8b und 9b über ihre Erstreckung derart, dass die Quernuten 8b und 9b bei den Umfangsnuten 4 bzw. 5 eine Tiefe aufweisen, die der Tiefe der Umfangsnuten 4, 5 entspricht. In Richtung der schmalen Umfangsnut 11 zwischen den beiden Blockreihen 8, 9 wird die Tiefe der Quernuten 8b, 9b zunehmend geringer und entspricht bei der Umfangsnut 11 der Tiefe der Umfangsnut 11. Die Niveauänderung der Quernuten 8b, 9b erfolgt entlang einer im Querschnitt flach S-förmig gekrümmten Kurve, sodass der Umfangsnut 11 benachbart in jeder Quernut 8b, 9b eine Grundanhebung 14 und 15 gebildet ist. Die Grundanhebungen 14, 15 bewirken eine gegenseitige Koppelung bzw. Anbindung der Blöcke 8a, 9a aus den beiden Blockreihen 8, 9 aneinander. Die Blockreihen 8, 9 und damit auch die Blöcke 8a, 9a sind in Umfangsrichtung gegeneinander im Wesentlichen um halbe Blocklängen versetzt, sodass die Quernuten 9b im mittleren Bereich der Blöcke 8a und die Quernuten 8b beim mittleren Bereich der Blöcke 9a in die Umfangsnut 11 münden. In den Blöcken 8a und 9a ist jeweils eine Anzahl von Einschnitten 16 und 17 ausgebildet, welche sich parallel zueinander und parallel zu den Quernuten 8b, 9b erstrecken und bei der gezeigten Ausführungsform in Draufsicht einen zickzack- bzw. wellenförmigen Verlauf aufweisen. Pro Profilblock 8a, 9a sind zumindest zwei Einschnitte 16 bzw. 17, vorzugsweise drei Einschnitte 16, 17 vorgesehen, wobei die Anzahl der Einschnitte 16, 17 auch mehr als drei betragen kann. Die Einschnitte 16, 17 weisen eine Breite in der Größenordnung von 0,4 mm bis 0,8 mm auf. In radialer Richtung sind die Einschnitte 16, 17 als sogenannte 3D-(dreidimensionale) Einschnitte ausgebildet, wie es beispielhaft in Fig. 3 angedeutet ist. Das bedeutet, dass die Einschnittwände derart strukturiert sind, dass sie sich vorzugsweise aus kleinen Flächenelementen, die beispielsweise Erhebungen in jeder Einschnittwand bilden, zusammensetzen, sodass sowohl bei in radialer Richtung als auch bei in axialer Richtung und bei diagonal zu diesen Richtungen wirkenden Kräften eine gegenseitig Abstützung der Einschnittwände aneinander möglich ist. Der Tiefenverlauf der Einschnitte 16, 17 ist an den Tiefenverlauf der jeweiligen Quernuten 8b, 9b in den Blockreihen 8, 9 angeglichen, die Einschnitte 16, 17 weisen daher ihre größte Tiefe bei den breiten Umfangsnuten 4, 5, ihre geringste Tiefe an ihren Einmündungsstellen in die schmale Umfangsnut 11 auf. Dabei kann ihre Tiefe an diesen Stellen der dortigen Tiefe der Umfangsnuten 4, 5 und 11 entsprechen, ihre Tiefe kann jedoch auch etwas geringer sein.

Die Blöcke 6a, 7a in den schulterseitigen Blockreihen 6, 7 sind in Umfangsrichtung durch breite Quernuten 6b, 7b voneinander getrennt, welche im Wesentlichen gerade und parallel zueinander sowie außerdem unter einem Winkel α' zur axialen Richtung verlaufen, welcher dem Winkel α entsprechen kann und in der Größenordnung von 10° bis 30° gewählt wird. Dabei sind die Quernuten 6b, 7b jeweils zu den in der gleichen Laufstreifenhälfte verlaufenden Quernuten 8b, 9b gegensinnig zur axialen Richtung geneigt. Die Breite der Quernuten 6b, 7b entspricht zumindest im Wesentlichen der zweifachen Breite der Quernuten 8b, 9b, vorzugsweise zwischen 150 % und 220 % der Breite der Quernuten 8b, 9b. Die Umfangslänge l₂ der Blöcke 6a, 7a entspricht im Wesentlichen der doppelten Umfangslänge l₁ der Blöcke 8a, 9a. Somit ist pro zwei Blöcken 8a, 9a aus den Blockreihen 8, 9 je ein Block 6a, 7a in den Blockreihen 6, 7 vorgesehen. Die tatsächlichen Umfangslängen l₂ der Blöcke 6a, 7a ergeben sich aus der für die Quernuten 6b, 7b gewählten Breite und der jeweiligen Position der Blöcke 6a, 7a in der gewählten Pitchfolge.

Wie die Schrägansicht in Fig. 2 zeigt weist der Nutgrund der Quernuten 6b, 7b einen zu jenem der Quernuten 8b, 9b analogen Tiefenverlauf auf. Die Quernuten 6b weisen ihre größte Tiefe an ihren schulterseitig gelegenen Mündungsbereichen in die Schulterflanken 20 auf, die Quernuten 7b an den Mündungsbereichen in die breiten Umfangsnuten 5. Schulterseitig entspricht die größte Tiefe der Quernuten 6b im Wesentlichen der maximalen Profiltiefe. Die Tiefe der Quernuten 6b, 7b wird in Richtung ihres Verlaufes zur schmalen Umfangsnut 10 zunehmend geringer, an den Mündungsbereichen entspricht die Tiefe der Quernuten 6b, 7b der Tiefe der Umfangsnut 10. Die Niveauänderung in den Quernuten 6b, 7b erfolgt entlang einer im Querschnitt schwach S-förmigen Kurve, sodass bei der Umfangsnut 10 Grundanhebungen 12, 13 gebildet sind. Durch die Grundanhebungen 12, 13 sind die beiden Blockreihen 6, 7 der Blockreihenpaare 2 aneinander angebunden und daher in ihrer gegenseitigen Beweglichkeit in erwünschter Weise eingeschränkt.

Auch in den Blöcken 6a, 7a verläuft jeweils eine Anzahl von Einschnitten 18, 19, die sich jeweils parallel zueinander und zu in Quernuten 6b, 7b erstrecken, in Draufsicht einen zickzack- bzw. wellenförmigen Verlauf aufweisen und eine Breite von 0,4 mm bis 0,8 mm besitzen. Die Anzahl der Einschnitte 18, 19 pro Block 6a, 7a beträgt vorzugsweise das Doppelte der Anzahl der Einschnitte 16, 17 in den Blöcken 8a, 9a, insbesondere zumindest sechs. In radialer Richtung betrachtet sind die Einschnitte 18, 19 sogenannte 2D-(zweidimensionale) Einschnitte, das heißt die Zickzackform, die an der Laufstreifenoberfläche vorliegt, setzt sich auch über die Tiefe der Einschnitte fort. Daraus resultieren bestimmte Abstützmöglichkeiten der Einschnittwände aneinander, insbesondere können sich die Einschnittwände bei in axialer Richtung wirkenden Kräften, bei Querkräften, besonders gut aneinander abstützen. Der Tiefenverlauf der Einschnitte 19 ist an den Tiefenverlauf der Quernuten 7b angeglichen. Ihre größte Tiefe weisen die Einschnitte 19 daher an ihren Mündungsbereichen in die Umfangsnuten 5 auf. Wie Fig. 3 zeigt weisen die Einschnitte 18 eine im Wesentlichen konstante Tiefe auf, die im Wesentlichen der Tiefe der Umfangsnuten 10 entspricht.

### Bezugsziffernliste

- 1 .......................: Laufstreifen
- 2 .......................: Blockreihenpaar, schulterseitig
- 3 .......................: Blockreihenpaar, mittig
- 4.......................: Umfangsnut, zentral
- 5 .......................: Umfangsnut
- 6 .......................: Blockreihe, schulterseitig
- 7 .......................: Blockreihe, schulterseitig
- 8 .......................: Blockreihe, mittig
- 9 .......................: Blockreihe, mittig
- 10 .....................: Umfangnut
- 11.....................: Umfangnut
- 12 .....................: Grundanhebung
- 13 .....................: Grundanhebung
- 14 .....................: Grundanhebung
- 15 .....................: Grundanhebung
- 16 .....................: Einschnitt
- 17 .....................: Einschnitt
- 18 .....................: Einschnitt
- 19 .....................: Einschnitt
- 20 .....................: Schulterflanke
- b .......................: Breite
- B ......................: Breite
- 6a .....................: Block
- 7a .....................: Block
- 8a .....................: Block
- 9a .....................: Block
- 6b .....................: Quernut
- 7b .....................: Quernut
- 8b .....................: Quernut
- 9b .....................: Quernut
- α .......................: Winkel
- α' ......................: Winkel
- l₁ .......................: Umfangslänge
- l₂ .......................: Umfangslänge

## Patentansprüche

1. Fahrzeugluftreifen für einen Nutzfahrzeugreifen, insbesondere für den Einsatz zur winterlichen Fahrbedingungen, mit einem Laufstreifen (1) mit mindestens sechs in Umfangsrichtung umlaufenden, im Wesentlichen übereinstimmend breiten Blockreihen (6, 7 ,8, 9), welche voneinander durch in Umfangrichtung umlaufende Umfangsnuten (4, 5) getrennt sind, wobei die Blöcke (6a, 7a, 8a, 9a) der einzelnen Blockreihen (6, 7 ,8, 9) voneinander durch zumindest im Wesentlichen gerade und in jeder Blockreihe (6, 7 ,8, 9) zueinander parallel verlaufenden Quernuten (6b, 7b, 8b, 9b) getrennt sind, welche zur axialen Richtung unter Winkeln von höchstens 30° verlaufen, wobei die Blöcke (6a, 7a,8 b, 9a) jeweils mit einer Anzahl von sich parallel zu den Quernuten(6b, 7b, 8b, 9b) erstreckenden Einschnitten (16, 17, 18, 19) versehen sind, wobei in jeder Laufstreifenhälfte je zwei Blockreihenpaare (2, 3) verlaufen, welche voneinander durch in Umfangsrichtung umlaufende, in der maximalen Profiltiefe ausgeführte erste Umfangsnuten (4, 5) getrennt sind, wobei zwischen den Blockreihen (6, 7 ,8, 9) jedes Blockreihenpaares zweite, schmäler als die ersten Umfangsnuten (4, 5) ausgeführte Umfangsnuten (10, 11) verlaufen, welche bis in eine Tiefe reichen, die geringer ist als die maximale Profiltiefe,
**dadurch gekennzeichnet,**
**dass** sämtliche Quernuten (6b, 7b, 8b, 9b) eine sich über ihre Erstreckung ändernde Tiefe aufweisen, derart, dass ihr Nutgrund, im Querschnitt betrachtet, entlang einer schwach S-förmig gekrümmten Kurve verläuft, wobei die Tiefe der Quernuten (6b, 7b, 8b, 9b) an ihren Mündungsstellen in die ersten Umfangsnuten (4, 5) bzw. an ihren Enden bei den Außenschultern (20) des Reifens zumindest im Wesentlichen der maximalen Profiltiefe entspricht und wobei die Tiefe der Quernuten (6b, 7b, 8b, 9b) an den Mündungsbereichen in die zweiten Umfangsnuten (10, 11) der Tiefe dieser Umfangsnuten (10, 11) entspricht.

2. Fahrzeugluftreifen nach Anspruch 1, **dadurch gekennzeichnet, dass** die Quernuten (6b, 7b) in den schulterseitigen Blockreihenpaaren (2) breiter sind als die Quernuten (7b, 8b) in den mittleren Blockreihenpaaren (3).

3. Fahrzeugluftreifen nach Anspruch 2, **dadurch gekennzeichnet, dass** die Breite der Quernuten (6b, 7b) in den schulterseitigen Bockreihenpaaren (2) zwischen 150 % und 220 % der Breite der Quernuten (7b, 8b) in den mittleren Blockreihenpaaren (3) beträgt.

4. Fahrzeugluftreifen nach einem der Ansprüche 1 bis 3, **dadurch gekennzeichnet, dass** die Umfangsnuten (10) zwischen den Blockreihen (6, 7) der schulterseitigen Blockreihenpaare (2) eine Tiefe aufweisen, die höchstens 35% der maximalen Profiltiefe entspricht.

5. Fahrzeugluftreifen nach einem der Ansprüche 1 bis 3, **dadurch gekennzeichnet, dass** die Umfangsnuten (11) zwischen den Blockreihen (8, 9) der mittleren Blockreihenpaare (3) eine Tiefe aufweisen, die höchstens 55 % der maximalen Profiltiefe entspricht.

6. Fahrzeugluftreifen nach einem der Ansprüche 1 bis 5, **dadurch gekennzeichnet, dass** die Umfangsnuten (10, 11) zwischen den Blockreihen (6, 7; 8, 9) der Bockreihenpaare (2, 3) eine Breite von 1,5 mm bis 3 mm aufweisen.

7. Fahrzeugluftreifen nach Anspruch 1, **dadurch gekennzeichnet, dass** die Blöcke (6a, 7a) in den Blockreihen (6, 7) der schulterseitigen Blockreihenpaare (2) eine Umfangslänge (l₂) aufweisen, die im Wesentlichen dem Zweifachen der Umfangslänge (l₁) der Blöcke (8a, 9a) in den Blockreihen (8, 9) der mittleren Blockreihenpaare (3) entspricht.

8. Fahrzeugluftreifen nach Anspruch 1, **dadurch gekennzeichnet, dass** die Einschnitte (16, 17) in den Blöcken (8a, 9a) der Blockreihen (8, 9) der mittleren Blockreihenpaare (3) sognannte 3D-Einschnitte sind.

9. Fahrzeugluftreifen nach Anspruch 1, **dadurch gekennzeichnet, dass** die Einschnitte (18, 19) in den Blöcken (6a, 7a) der Blockreihen (6, 7) der schulterseitigen Blockreihenpaare (2) sogenannte 2D-Einschnitte sind.

10. Fahrzeugluftreifen nach Anspruch 1, 8 oder 9, **dadurch gekennzeichnet, dass** die Einschnitte (16, 17, 18, 19), in Draufsicht betrachtet, einen zickzack- oder wellenförmigen Verlauf aufweisen.

11. Fahrzeugluftreifen nach einem der Ansprüche 1 oder 8 bis 10, **dadurch gekennzeichnet, dass** die Einschnitte (17, 18, 19) in den mittleren Blockreihenpaaren (3) und in den Blöcken (7a) der weiter laufstreifeninnenseitig verlaufenden Blockreihen (7) der schulterseitigen Blockreihenpaare (2) einen Tiefenverlauf aufweisen, welcher dem Tiefenverlauf der Quernuten (7b, 8b, 9b) in den Blockreihen (7, 8, 9), in welchen die betreffenden Einschnitte (17, 18, 19) verlaufen, zumindest im Wesentlichen entspricht.

## Claims

1. Pneumatic vehicle tyre for a commercial vehicle tyre, in particular for use in winter driving conditions, comprising a tread (1) with at least six rows of bars (6, 7, 8, 9), which run around in the circumferential direction, are of substantially the same width and are separated from one another by circumferential grooves (4, 5) running around in the circumferential direction, wherein the bars (6a, 7a, 8a, 9a) of the individual rows of bars (6, 7, 8, 9) are separated from one another by transverse grooves (6b, 7b, 8b, 9b), which run at least substantially straight and parallel to one another in each row of bars (6, 7, 8, 9) and run at angles of at most 30° in relation to the axial direction, wherein the bars (6a, 7a, 8b, 9a) are respectively provided with a number of sipes (16, 17, 18, 19) extending parallel to the transverse grooves (6b, 7b, 8b, 9b), wherein in each half of the tread there run two pairs of rows of bars (2, 3), which are separated from one another by first circumferential grooves (4, 5), which run around in the circumferential direction and are made to the maximum depth of the tread pattern, wherein second circumferential grooves (10, 11), which are made narrower than the first circumferential grooves (4, 5) and reach to a depth that is less than the maximum depth of the tread pattern, run between the rows of bars (6, 7, 8, 9) of each pair of rows of bars,
**characterized**
**in that** all of the transverse grooves (6b, 7b, 8b, 9b) have a depth that changes over their extent in such a way that their groove base, considered in cross section, runs along a curve with a slight s-shaped curvature, wherein, at the points where they go into the first circumferential grooves (4, 5) or at their ends at the outer shoulders (20) of the tyre, the depth of the transverse grooves (6b, 7b, 8b, 9b) corresponds at least substantially to the maximum depth of the tread pattern and wherein, at the points where they go into the second circumferential grooves (10, 11), the depth of the transverse grooves (6b, 7b, 8b, 9b) corresponds to the depth of these circumferential grooves (10, 11).

2. Pneumatic vehicle tyre according to Claim 1, **characterized in that** the transverse grooves (6b, 7b) in the pairs of rows of bars (2) at the shoulders are wider than the transverse grooves (7b, 8b) in the pairs of rows of bars (3) in the middle.

3. Pneumatic vehicle tyre according to Claim 2, **characterized in that** the width of the transverse grooves (6b, 7b) in the pairs of rows of bars (2) at the shoulders is between 150% and 220% of the width of the transverse grooves (7b, 8b) in the pairs of rows of bars (3) in the middle.

4. Pneumatic vehicle tyre according to one of Claims 1 to 3, **characterized in that** the circumferential grooves (10) between the rows of bars (6, 7) of the pairs of rows of bars (2) at the shoulders have a depth that corresponds at most to 35% of the maximum depth of the tread pattern.

5. Pneumatic vehicle tyre according to one of Claims 1 to 3, **characterized in that** the circumferential grooves (11) between the rows of bars (8, 9) of the pairs of rows of bars (3) in the middle have a depth that corresponds at most to 55% of the maximum depth of the tread pattern.

6. Pneumatic vehicle tyre according to one of Claims 1 to 5, **characterized in that** the circumferential grooves (10, 11) between the rows of bars (6, 7; 8, 9) of the pairs of rows of bars (2, 3) have a width of 1.5 mm to 3 mm.

7. Pneumatic vehicle tyre according to Claim 1, **characterized in that** the bars (6a, 7a) in the rows of bars (6, 7) of the pairs of rows of bars (2) at the shoulders have a circumferential length (l₂) that corresponds substantially to twice the circumferential length (l₁) of the bars (8a, 9a) in the rows of bars (8, 9) of the middle pairs of rows of bars (3).

8. Pneumatic vehicle tyre according to Claim 1, **characterized in that** the sipes (16, 17) in the bars (8a, 9a) of the rows of bars (8, 9) of the pairs of rows of bars (3) in the middle are so-called 3D sipes.

9. Pneumatic vehicle tyre according to Claim 1, **characterized in that** the sipes (18, 19) in the bars (6a, 7a) of the rows of bars (6, 7) of the pairs of rows of bars (2) at the shoulders are so-called 2D sipes.

10. Pneumatic vehicle tyre according to claim 1, 8 or 9, **characterized in that**, considered in plan view, the sipes (16, 17, 18, 19) have a zig-zag or wave-shaped course.

11. Pneumatic vehicle tyre according to one of Claims 1 or 8 to 10, **characterized in that** the sipes (17, 18, 19) in the pairs of rows of bars (3) in the middle and in the bars (7a) of the rows of bars (7) of the pairs of rows of bars (2) at the shoulders that run more towards the inside of the tread have a depth profile that corresponds at least substantially to the depth profile of the transverse grooves (7b, 8b, 9b) in the rows of bars (7, 8, 9) in which the relevant sipes (17, 18, 19) run.

## Revendications

1. Pneumatique de véhicule pour un pneumatique de véhicule utilitaire, en particulier pour l'utilisation dans des conditions de conduite hivernales, comprenant une bande de roulement (1) avec au moins six larges rangées de blocs (6, 7, 8, 9) coïncidant essentiellement, disposées sur le pourtour dans la direction périphérique, qui sont séparées les unes des autres par des rainures périphériques (4, 5) disposées sur le pourtour dans la direction périphérique, les blocs (6a, 7a, 8a, 9a) des rangées de blocs individuelles (6, 7, 8, 9) étant séparés les uns des autres par des rainures transversales (6b, 7b, 8b, 9b) au moins essentiellement droites et s'étendant parallèlement les unes aux autres dans chaque rangée de blocs (6, 7, 8, 9), lesquelles s'étendent suivant des angles de 30° au maximum par rapport à la direction axiale, les blocs (6a, 7a, 8b, 9a) étant à chaque fois pourvus d'une pluralité d'entailles (16, 17, 18, 19) s'étendant parallèlement aux rainures transversales (6b, 7b, 8b, 9b), à chaque fois deux paires de rangées de blocs (2, 3) s'étendant dans chaque moitié de la bande de roulement, lesquelles sont séparées l'une de l'autre par des premières rainures périphériques (4, 5) disposées sur le pourtour dans la direction périphérique, réalisées dans la profondeur maximale du profil, des deuxièmes rainures périphériques (10, 11) plus étroites que les premières rainures périphériques (4, 5), s'étendant entre les rangées de blocs (6, 7, 8, 9) de chaque paire de rangées de blocs, lesquelles s'étendent jusqu'à une profondeur inférieure à la profondeur maximale du profilé,
**caractérisé en ce que**
toutes les rainures transversales (6b, 7b, 8b, 9b) présentent une profondeur variant sur leur étendue de telle sorte que leur base de rainure, vu en coupe transversale, s'étende le long d'une courbe ayant une faible courbure en forme de S, la profondeur des rainures transversales (6b, 7b, 8b,
9b) au niveau de leurs zones d'embouchure dans les premières rainures périphériques (4, 5) ou au niveau de leurs extrémités dans les épaulements extérieurs (20) du pneu correspondant au moins essentiellement à la profondeur maximale du profil et la profondeur des rainures transversales (6b, 7b, 8b, 9b) au niveau des régions d'embouchure dans les deuxièmes rainures périphériques (10, 11) correspondant à la profondeur de ces rainures périphériques (10, 11).

2. Pneumatique de véhicule selon la revendication 1, **caractérisé en ce que** les rainures transversales (6b, 7b) dans les paires de rangées de blocs du côté de l'épaulement (2) sont plus larges que les rainures transversales (7b, 8b) dans les paires de rangées de blocs centrales (3).

3. Pneumatique de véhicule selon la revendication 2, **caractérisé en ce que** la largeur des rainures transversales (6b, 7b) dans les paires de rangée de blocs du côté de l'épaulement (2) représente entre 150 % et 220 % de la largeur des rainures transversales (7b, 8b) dans les paires de rangée de blocs centrales (3).

4. Pneumatique de véhicule selon l'une quelconque des revendications 1 à 3, **caractérisé en ce que** les rainures périphériques (10) entre les rangées de blocs (6, 7) des paires de rangées de blocs du côté de l'épaulement (2) présentent une profondeur qui correspond au maximum à 35 % de la profondeur maximale du profilé.

5. Pneumatique de véhicule selon l'une quelconque des revendications 1 à 3, **caractérisé en ce que** les rainures périphériques (11) entre les rangées de blocs (8, 9) des paires de rangées de blocs centrales (3) présentent une profondeur qui correspond au maximum à 55 % de la profondeur maximale du profilé.

6. Pneumatique de véhicule selon l'une quelconque des revendications 1 à 5, **caractérisé en ce que** les rainures périphériques (10, 11) entre les rangées de blocs (6, 7 ; 8, 9) des paires de rangées de blocs (2, 3) présentent une largeur de 1,5 mm à 3 mm.

7. Pneumatique de véhicule selon la revendication 1, **caractérisé en ce que** les blocs (6a, 7a) dans les rangées de blocs (6, 7) des paires de rangées de blocs du côté de l'épaulement (2) présentent une longueur périphérique (l₂) qui correspond essentiellement au double de la longueur périphérique (l₁) des blocs (8a, 9a) dans les rangées de blocs (8, 9) des paires de rangées de blocs centrales (3).

8. Pneumatique de véhicule selon la revendication 1, **caractérisé en ce que** les entailles (16, 17) dans les blocs (8a, 9a) des rangées de blocs (8, 9) des paires de rangées de blocs centrales (3) sont des entailles dites à 3D.

9. Pneumatique de véhicule selon la revendication 1, **caractérisé en ce que** les entailles (18, 19) dans les blocs (6a, 7a) des rangées de blocs (6, 7) des paires de rangée de blocs du côté de l'épaulement (2) sont des entailles dites à 2D.

10. Pneumatique selon la revendication 1, 8 ou 9, **caractérisé en ce que** les entailles (16, 17, 18, 19), en vue de dessus, présentent une allure en zigzag ou ondulée.

11. Pneumatique de véhicule selon l'une quelconque des revendications 1 ou 8 à 10, **caractérisé en ce que** les entailles (17, 18, 19) dans les paires de rangées de blocs centrales (3) et dans les blocs (7a) des autres rangées de blocs (7) s'étendant du côté intérieur de la bande de roulement des paires de rangées de blocs du côté de l'épaulement (2) présentent une allure en profondeur qui correspond au moins essentiellement à l'allure en profondeur des rainures transversales (7b, 8b, 9b) dans les rangées de blocs (7, 8, 9), dans lesquelles s'étendent les entailles correspondantes (17, 18, 19).
